# EUROPÄISCHE PATENTSCHRIFT

(11) **EP 2 675 961 B1**
(45) Veröffentlichungstag und Bekanntmachung des Hinweises auf die Patenterteilung: **10.05.2017**
(21) Anmeldenummer: 12718888.6
(22) Anmeldetag: 08.02.2012
(51) Int. Cl.: E04B 1/76, E04B 2/88, E04F 13/00, F24F 7/04, F24F 13/08, E04B 1/70, F24F 7/00, F24J 2/04

(54) **BAUKONSTRUKTION MIT HINTERLÜFTETEN FASSADENELEMENTEN**
CONSTRUCTION WITH REAR VENTILATED FACADE ELEMENTS
CONSTRUCTION PRÉSENTANT DES ÉLÉMENTS DE FAÇADE À VENTILATION ARRIÈRE

(30) Priorität: 16.02.2011 AT 2052011
(43) Veröffentlichungstag der Anmeldung: 25.12.2013
(73) Patentinhaber: Aschauer, Johann, 4362 Bad Kreuzen (AT)
(72) Erfinder: Aschauer, Johann, 4362 Bad Kreuzen (AT)
(74) Vertreter: Patentanwaltskanzlei Hübscher
(86) Internationale Anmeldenummer: PCT/AT2012/050020
(87) Internationale Veröffentlichungsnummer: WO 2012/109690

(56) Entgegenhaltungen:
- DE-A1- 19 859 851
- DE-A1-102009 020 003
- DE-C1- 3 900 031
- DE-U1-202007 011 819
- US-A- 4 237 865

## Beschreibung

### Technisches Gebiet

Die Erfindung betrifft eine Baukonstruktion mit hinterlüfteten Fassadenelementen, insbesondere Scheiben oder Platten, die einem Tragwerk insbesondere aus vertikalen Stützelementen und horizontalen Tragelementen vorhängbar sind, wobei den Fassadenelementen je ein Rahmen zugeordnet ist, der einen Hinterlüftungsquerschnitt aufspannt und dessen oberes sowie unteres Rahmenschenkelprofil zur Fassadenfront mündende Lüftungsöffnungen aufweist.

### Stand der Technik

Fassadenverkleidungen aus hinterlüfteten, plattenförmigen Fassadenelementen, die mit Hilfe eines Tragwerks einer Gebäudewand vorgehängt werden, sind in vielen Ausführungsformen bekannt. Beispielsweise seien hier die EP 302 472 A1, die DE 20 2007 011 819 U1 und die DE 10 2009 020 003 A1 erwähnt. Üblicherweise wird das Tragwerk aus einem ein Spalier aus parallel zueinander verlaufenden senkrecht und horizontal angeordneten Tragprofilen an der Gebäudewand befestigt, an welchem Tragwerk wiederum die plattenförmigen Fassadenelemente angeschlagen werden. Das Tragwerk besteht im Allgemeinen aus Metall und ist im Mauerwerk verankert. Je nach Art der Fassadenelemente erfolgt die Befestigung wahlweise punktförmig durch Bolzen, Schrauben, Klammern, Klemmstücke od. dgl.. Alternativ kann jedem Fassadenelement ein Rahmen zugeordnet sein, welcher das Fassadenelement trägt und am Tragwerk angeschlagen ist. Kältebrücken werden meist durch Verwendung von Kunststoffisolatoren vermieden.

Die punktförmige Befestigung hat bei bekannten Konstruktionen den Nachteil, dass erhebliche Ausrichtarbeiten für die einzelnen Fassadenelemente notwendig sind, da sich die Maßabweichungen der vorgefertigten Elemente der Tragkonstruktion bei der Montage der Fassadenelemente mit den unvermeidbaren Maßabweichungen der Gebäudewand und im Tragwerk aufsummieren. Die Rahmenbauweise ist zwar in der Fertigung aufwendiger, die einzelnen Fassadenelemente lassen sich aber exakter an dem Tragwerk anschlagen, womit üblicherweise nur ein geringerer Aufwand auf Nacharbeiten entfällt. Zudem ergeben sich bei den bekannten Konstruktionen Schwierigkeiten beim Korrosionsschutz und bei der Hinterlüftung der Fassade.

Aus der DE 39 000 031 C1 ist ein Wetterschutzgitter für einen Hinterlüftungsspalt bekannt, bei dem auf der Eintrittsseite Strömungsleitführungen angeordnet sind, die zur Horizontalen geneigte Eintrittsbereiche und anschließende, etwa horizontal verlaufende Endbereiche aufweisen und wobei die geneigten Eintrittsbereiche sehr viel länger als die horizontal verlaufenden Endbereiche sind und wobei die Endbereiche in Strömungsrichtung verlaufen. Die Eintrittsbereiche der Strömungsleitführungen sind in einem Winkel von 20 bis 40 Grad zur Horizontalen geneigt. Diesen Strömungsleitführungen, von denen eine Mehrzahl parallel zueinander lamellenartig im Strömungsquerschnitt angeordnet ist, lenken den Luftstrom nur gering ab, was nur einen vergleichsweise geringen Druckverlust beim Durchströmen bewirkt.

### Darstellung der Erfindung

Der Erfindung liegt die Aufgabe zugrunde, eine Baukonstruktion mit hinterlüfteten Fassadenelementen der eingangs geschilderten Art zu schaffen, die neben einer ordnungsgemäßen Hinterlüftung einen verbesserten Schutz gegen ein Eindringen von Flüssigkeiten in den Hinterlüftungsbereich, wie beispielsweise Schlagregen, ein konzentrierten Wasserstrahl beim Reinigen der Elemente od. dgl., bietet. Die Erfindung soll sich insbesondere zur Schaffung dampfdiffusionsoffener Baukonstruktionen eignen.

Die Erfindung löst diese Aufgabe dadurch, dass wenigstens dem oberen Rahmenschenkelprofilinneren ein labyrinthdichtungsartiger Spritzwasserschutz zugeordnet ist, der unterhalb der Lüftungsöffnungen an das Rahmenschenkelprofil anschließt, der die Lüftungsöffnungen überdeckt und der mit seinem freien Ende gegen die Fassadenfront weist. Durch diese Maßnahmen ist zusätzlich zu einer ordnungsgemäßen Hinterlüftung ein verbesserter Schutz gegen ein Eindringen von Flüssigkeiten in den Hinterlüftungsbereich gegeben. Gewährleistet wird dies insbesondere durch den labyrinthdichtungsartigen Spritzwasserschutz, wenigstens im oberen Rahmenschenkel. Der Spritzwasserschutz ist dabei so zu dimensionieren, dass er von Schlagregen nicht überwunden werden kann. Ein konzentrierter Wasserstrahl, wie er beispielsweise beim Reinigen der Elemente mittels Hochdruckreiniger auftritt wird vom labyrinthdichtungsartigen Spritzwasserschutz derart gebrochen und umgelenkt, dass die Flüssigkeit zwar teilweise durch die Lüftungsöffnungen in das Profil eindringen kann, dort aber vom Spritzwasserschutz an einem Vordringen in den Hinterlüftungsbereich hinter dem Fassadenelement gehindert und über in Rahmenschenkelprofillängsrichtung benachbarte Lüftungsöffnungen wieder aus dem Profil ausgeleitet. Das Tragwerk kann beispielsweise auch eine herkömmliche, gegebenenfalls zu sanierende Hausfassade sein, an welcher die hinterlüfteten Fassadenelemente befestigt werden. Damit kann in einfacher Weise mit der Erfindung eine dampfdiffusionsoffene Baukonstruktion geschaffen werden. Sind bzw. umfassen die hinterlüfteten Fassadenelemente aktive oder passive Solarkollektoren, so wird durch die Hinterlüftung beispielsweise auf einfache und sichere Art ein Überhitzen der Module, insbesondere von besonders anfälligen Photovoltaikzellen, vermieden.

Besonders einfache Konstruktionsverhältnisse für den Spritzwasserschutz ergeben sich, wenn dieser nach Art eines mit seiner Öffnung gegen die Fassadenfront gerichteten C-Profils ausgebildet ist. Die Dimensionierung der einzelnen Abstände zwischen dem Profil und dem Spritzwasserschutz richtet sich nach dem jeweiligen Einsatzzweck und obliegt dem Fachmann. Zudem empfiehlt es sich, um schon vor einem eindringen von Flüssigkeit in die Lüftungsöffnungen Energie aus der Flüssigkeit zu nehmen, wenn die Lüftungsöffnungen gegenüber der Fassadenfront, beispielsweise um in etwa die Fassadenelementdicke zurückversetzt ist.

Dem unteren Rahmenschenkelprofilinneren kann zusätzlich oder alternativ ein Spritzwasserschutz zugeordnet sein, der oberhalb der Lüftungsöffnungen an die Rahmenschenkelprofilrückwand anschließt und der mit seinem freien Ende gegen die Fassadenfront weist. Ein durch Lüftungsöffnungen in das Profil eindringender Wasserstrahl wird vom Spritzwasserschutz an einem aufsteigen in den Hinterlüftungsbereich gehindert und über in Rahmenschenkelprofillängsrichtung benachbarte Lüftungsöffnungen wieder aus dem Profil ausgeleitet.

Saubere Montageverhältnisse ergeben sich, wenn das obere und vorzugweise das untere Rahmenschenkelprofil einen Aufnahmefalz für die Fassadenelemente ausbilden, womit die Fassadenelemente nicht nur besser gegen Beschädigungen geschützt sind, sondern auch noch problemlos an der Unterkonstruktion angeschlagen werden können.

In diesem Zusammenhang können das obere und untere Rahmenschenkelprofil zusammen mit randseitigen Rahmenschenkelprofilen zu einem umfangsseitig geschlossenen Rahmen zusammengesetzt sein, wobei die randseitigen Rahmenschenkelprofile wahlweise lediglich an die Fassadenelementrückseite angesetzt sind oder zusätzlich einen Falz aufweisen, in den das Fassadenelement eingesetzt ist. Liegen die Rückwände der Rahmenschenkel dabei zudem in einer gemeinsamen Ebene und ist der Rahmen an eine vorzugsweise gasdichte aber dampfdurchlässige Unterkonstruktion angesetzt, so kann ein direkter Gasaustausch zwischen benachbarten Fassadenelementen vermieden werden. Jedes Fassadenelement ist somit nur für sich hinterlüftet und nicht zusätzlich über benachbarte Fassadenelemente, was eine verbesserte Brandschutzwirkung der erfindungsgemäßen Konstruktion bewirkt.
Sind dem oberen und dem unteren Rahmenschenkelprofil im zum Hinterlüftungsquerschnitt ausmündenden Lüftungskanal den Lüftungskanalquerschnitt überdeckende Insektenschutzgitter zugeordnet, kann damit nicht nur ein Einnisten von Insekten im Hinterlüftungbereich vermieden sondern durch das Gitter auch die Sicherheit gegen ein Eindringen von Flüssigkeiten in den Hinterlüftungsbereich erhöht werden.
Die Erfindung betrifft zudem ein Fassadenelement zur Verwendung in einer oben dargestellten Baukonstruktion mit einem Rahmen, der einen Hinterlüftungsquerschnitt aufspannt und dessen oberes sowie unteres Rahmenschenkelprofil zur Fassadenfront mündende Lüftungsöffnungen aufweist. Dabei ist wenigstens dem oberen Rahmenschenkelprofilinneren ein labyrinthdichtungsartiger Spritzwasserschutz zugeordnet, der unterhalb der Lüftungsöffnungen an das Rahmenschenkelprofil anschließt, der die Lüftungsöffnungen überdeckt und der mit seinem freien Ende im eingebauten Zustand gegen die Fassadenfront weist.

### Kurze Beschreibung der Zeichnung

In der Zeichnung ist die Erfindung in einem Ausführungsbeispiel schematisch dargestellt. Es zeigen
Fig. 1 einen Ausschnitt einer erfindungsgemäßen Baukonstruktion in Vorderansicht,
Fig. 2 die Baukonstruktion aus Fig. 1 im Schnitt nach der Linie II-II,
Fig. 3 die Baukonstruktion aus Fig. 2 im Schnitt nach der Linie III-III,

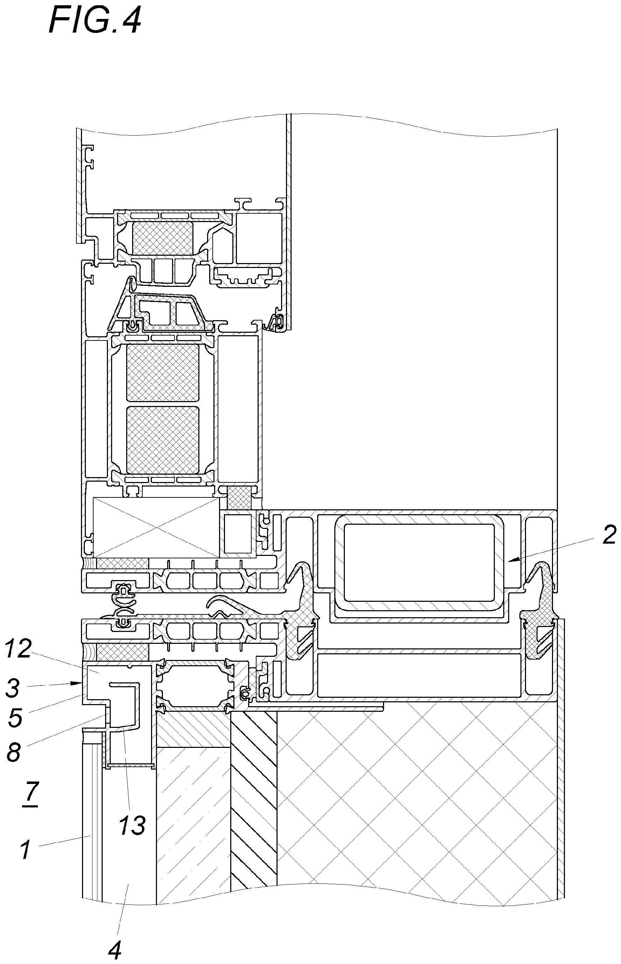

Fig. 4 eine ausschnittsweise Einbausituation eines Fassadenelementes im Querschnitt und

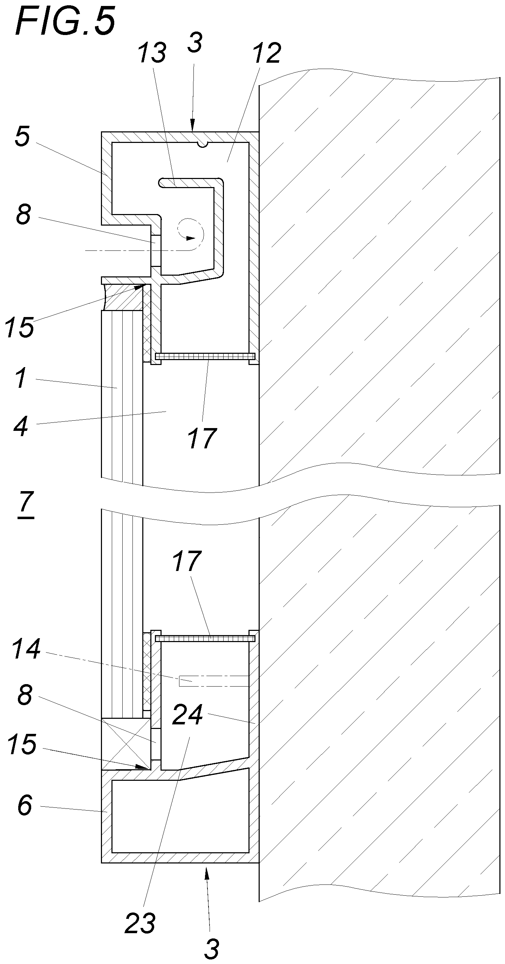

Fig. 5 eine direkt an einer Gebäudewand angeordnete Konstruktionsvariante der Erfindung.

### Weg zur Ausführung der Erfindung

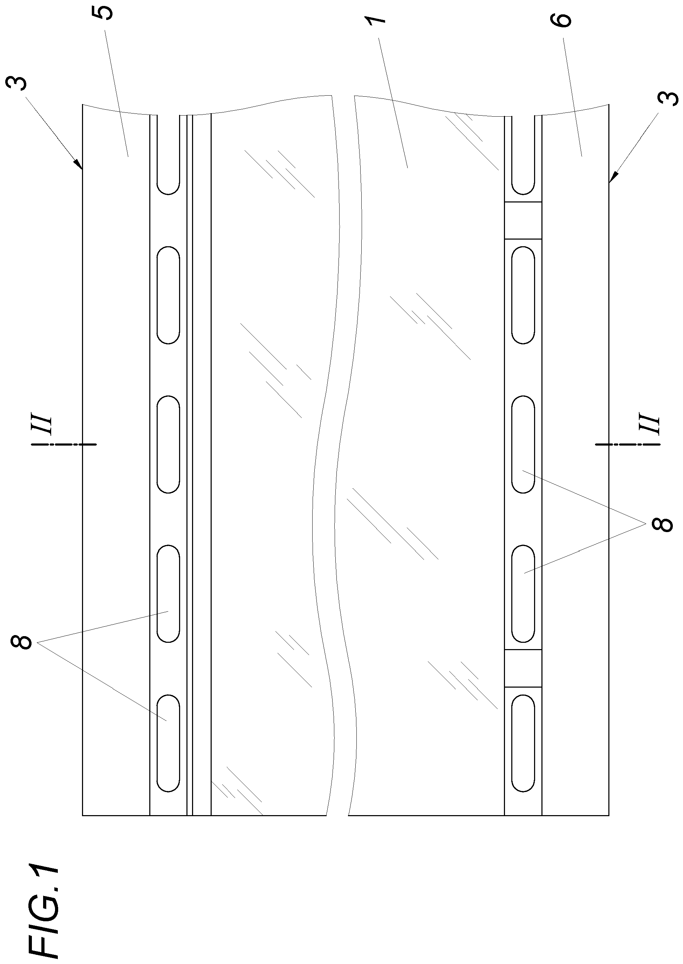

Eine erfindungsgemäße Baukonstruktion umfasst mindestens ein hinterlüftetes Fassadenelement 1, insbesondere eine Scheibe, Platte oder ein Solarmodul, das einem Tragwerk 2 aus vertikalen Stützelementen und horizontalen Tragelementen oder einer Gebäudewand vorhängbar ist. Den Fassadenelementen 1 ist je ein Rahmen 3 zugeordnet, der einen Hinterlüftungsquerschnitt 4 aufspannt. Sowohl das obere sowie auch das untere Rahmenschenkelprofil 5, 6 des Rahmens 3 weisen zur Fassadenfront 7 mündende Lüftungsöffnungen 8 auf. Die einzelnen Profile des Rahmens 3 sind im dargestellten Ausführungsbeispiel über Isolierstege 9 an weiteren Profilen angeschlagen, die bereits Teil des Tragwerkes 2 sein können oder aber noch Teil des Rahmens 3 sind. Im dargestellten Ausführungsbeispiel nach Fig. 1 bis 3 sind diese Profile 10 noch Teile des Rahmens 3, der zudem in seinem Inneren eine Unterkonstruktion 11 aus diversen Isoliermaterialien, bzw. aktive oder passive Solarelemente, aufnimmt. Die Profile 10 sind dann über geeignete Mittel am Tragwerk 2 anzuschlagen. Ist eine erhöhte Brandschutzwirkung der Konstruktion gefordert, kann zusätzlich zu den Isolierstegen 9 bzw. anstatt der Isolierstege 9 ein metallisches Verbindungsprofil 29 vorgesehen sein, um die Profile des Rahmens 3 an den weiteren, eine Ebene dahinterliegenden Profilen anzuschlagen. Die Unterkonstruktion 11 besteht insbesondere aus dampfdiffusionsoffenen Bauteilen.

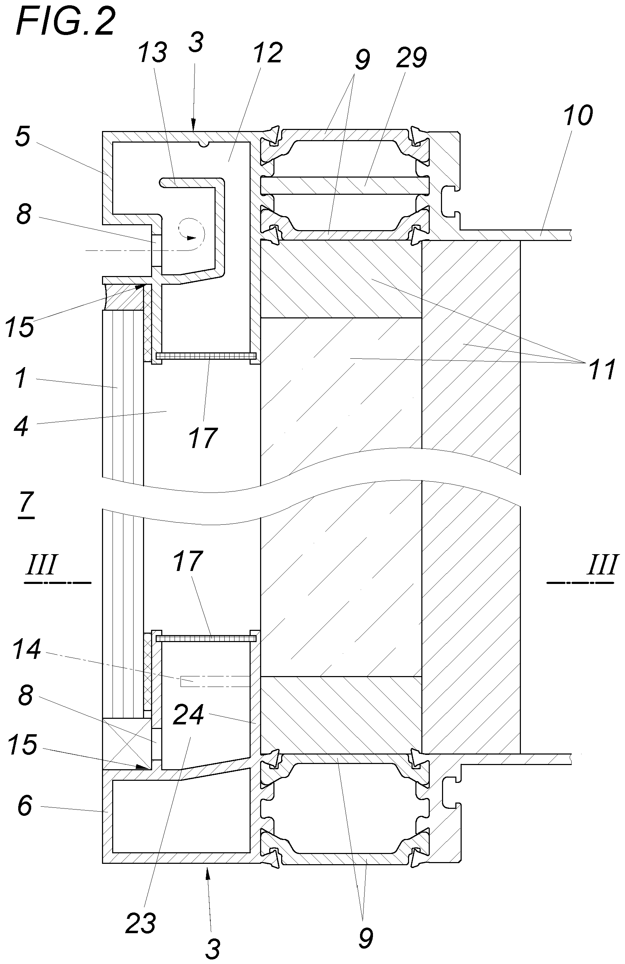

Um für eine ordnungsgemäße Hinterlüftung bei einem ausreichenden Schutz gegen ein Eindringen von Spritzwasser in den Hinterlüftungsquerschnitt 4 zu sorgen, ist wenigstens dem oberen Rahmenschenkelprofilinneren 12 ein labyrinthdichtungsartiger Spritzwasserschutz 13 zugeordnet, der unterhalb der Lüftungsöffnung 8 an das Rahmenschenkelprofil 5 anschließt, der die Lüftungsöffnungen 8 nach oben hin überdeckt und der mit seinem freien Ende gegen die Fassadenfront 7 weist. Gegebenenfalls durch die Lüftungsöffnungen 8 eindringende Flüssigkeit wird vom Spritzwasserschutz 13 aufgefangen, in Rahmenschenkelprofillängsachse umgeleitet und über benachbarte Lüftungsöffnungen wieder aus dem Rahmenschenkelprofil 5 ausgeleitet. Wie insbesondere Fig. 2 entnommen werden kann, ist dieser Spritzwasserschutz 13 nach Art eines mit seiner gegen die Fassadenfront 7 gerichteten C-Profils ausgebildet.

Dem unteren Rahmenschenkelprofilinneren 23, also dem Inneren des unteren Rahmenschenkelprofils 6, ist ein Spritzwasserschutz 14 in Form eines Steges zugeordnet, der oberhalb der Lüftungsöffnungen 8 an die Rahmenschenkelprofilrückwand 24 anschließt und der mit seinem freien Ende gegen die Fassadenfront 7 weist.

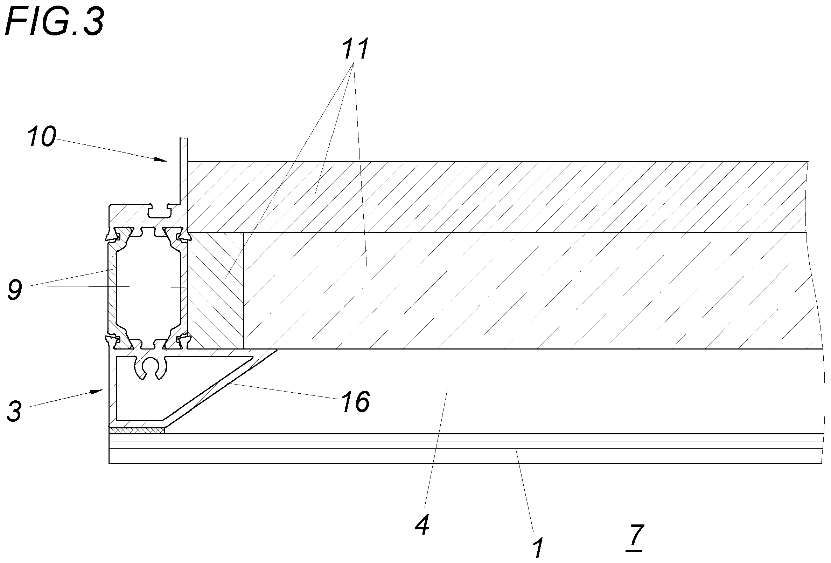

Das obere und das untere Rahmenschenkelprofil 5, 6 bilden je einen Aufnahmefalz 15 für die Fassadenelemente 1 aus. Das obere und das untere Rahmenschenkelprofil 5, 6 ergänzen sich zusammen mit den randseitigen Rahmenschenkelprofilen 16 (Fig. 3) zu einem umfangsseitig geschlossenen Rahmen 3. Die Rückwände 24 der Rahmenschenkel 5, 6, 16 liegen in einer gemeinsamen Ebene und sind, wie dies insbesondere Fig. 2 entnommen werden kann, an eine gasdichte, aber dampfdurchlässige Unterkonstruktion 11, angesetzt. Durch diese Maßnahme ist gewährleistet, dass jedes Fassadenelement 1 für sich hinterlüftet wird und keine Beeinflussung der Hinterlüftung bzw. Belüftung durch benachbarte Fassadenelemente erfolgt. Dies ist insbesondere für einen verbesserten Brandschutz von Vorteil, da die einzelnen Fassadenelemente 1 über deren Rahmen 3 untereinander gasentkoppelt sind.

Zusätzlich sind dem oberen und dem unteren Rahmenschenkelprofil 5, 6 im zum Hinterlüftungsquerschnitt 4 ausmündenden Lüftungskanal den Lüftungsquerschnitt 4 überdeckende Insektenschutzgitter 17 zugeordnet.

## Patentansprüche

1. Baukonstruktion mit hinterlüfteten Fassadenelementen (1), insbesondere Scheiben oder Platten, die einem Tragwerk (2) insbesondere aus vertikalen Stützelementen und horizontalen Tragelementen, vorhängbar sind, wobei den Fassadenelementen je ein Rahmen (3) zugeordnet ist, der einen Hinterlüftungsquerschnitt (4) aufspannt und dessen oberes sowie unteres Rahmenschenkelprofil (5, 6) zur Fassadenfront (7) mündende Lüftungsöffnungen (8) aufweist, **dadurch gekennzeichnet, dass** wenigstens dem oberen Rahmenschenkelprofilinneren (12) ein labyrinthdichtungsartiger Spritzwasserschutz (13) zugeordnet ist, der unterhalb der Lüftungsöffnungen (8) an das Rahmenschenkelprofil anschließt, der die Lüftungsöffnungen (8) überdeckt und der mit seinem freien Ende gegen die Fassadenfront (7) weist.

2. Baukonstruktion nach Anspruch 1, **dadurch gekennzeichnet, dass** der Spritzwasserschutz (13) nach Art eines mit seiner Öffnung gegen die Fassadenfront (7) gerichteten C-Profils ausgebildet ist.

3. Baukonstruktion nach Anspruch 1 oder 2, **dadurch gekennzeichnet, dass** dem unteren Rahmenschenkelprofilinneren (23) ein Spritzwasserschutz (14) zugeordnet ist, der oberhalb der Lüftungsöffnungen (8) an die Rahmenschenkelprofilrückwand (24) anschließt und der mit seinem freien Ende gegen die Fassadenfront (7) weist.

4. Baukonstruktion nach einem der Ansprüche 1 bis 3, **dadurch gekennzeichnet, dass** das obere und vorzugweise das untere Rahmenschenkelprofil (5, 6) einen Aufnahmefalz (15) für die Fassadenelemente ausbilden.

5. Baukonstruktion nach einem der Ansprüche 1 bis 4, **dadurch gekennzeichnet, dass** dem oberen und dem unteren Rahmenschenkelprofil (5, 6) im zum Hinterlüftungsquerschnitt (4) ausmündenden Lüftungskanal den Lüftungskanalquerschnitt (4) überdeckende Insektenschutzgitter zugeordnet sind.

6. Baukonstruktion nach einem der Ansprüche 1 bis 5, **dadurch gekennzeichnet, dass** das obere und untere Rahmenschenkelprofil (5, 6) zusammen mit randseitigen Rahmenschenkelprofilen (16) zu einem umfangsseitig geschlossenen Rahmen zusammengesetzt sind.

7. Baukonstruktion nach Anspruch 6, **dadurch gekennzeichnet, dass** die Rückwände der Rahmenschenkel (5, 6, 16) in einer gemeinsamen Ebene liegen und dass der Rahmen vorzugsweise an eine gasdichte aber dampfdurchlässige Unterkonstruktion (11) angesetzt ist.

8. Baukonstruktion nach einem der Ansprüche 1 bis 7, **dadurch gekennzeichnet, dass** das hinterlüftete Fassadenelement (1) wenigstens einen Solarkollektor umfasst.

9. Baukonstruktion nach einem der Ansprüche 1 bis 8, **dadurch gekennzeichnet, dass** die Profile des Rahmens (3) über Isolierstege (9) und/oder wenigstens ein metallisches Verbindungsprofil (29) an weiteren, eine Ebene dahinterliegenden Profilen anzuschlagen sind.

10. Fassadenelement zur Verwendung in einer Baukonstruktion nach einem der Ansprüche 1 bis 7 mit einem Rahmen (3), der einen Hinterlüftungsquerschnitt (4) aufspannt und dessen oberes sowie unteres Rahmenschenkelprofil (5, 6) zur Fassadenfront (7) mündende Lüftungsöffnungen (8) aufweist, **dadurch gekennzeichnet, dass** wenigstens dem oberen Rahmenschenkelprofilinneren (12) ein labyrinthdichtungsartiger Spritzwasserschutz (13) zugeordnet ist, der unterhalb der Lüftungsöffnungen an das Rahmenschenkelprofil anschließt, der die Lüftungsöffnungen (8) überdeckt und der mit seinem freien Ende im eingebauten Zustand gegen die Fassadenfront weist.

## Claims

1. Building construction with rear-ventilated cladding elements (1), in particular panels or boards, which can be hung in front of a bearing structure (2), in particular consisting of vertical support elements and horizontal bearing elements, wherein the cladding elements are each assigned a frame (3) which spans a rear ventilation cross-section (4) and of which the upper and lower frame limb profiles (5, 6) have ventilation openings (8) issuing towards the cladding front (7), **characterised in that** at least the upper frame limb profile interior (12) is assigned a labyrinth seal-like splash guard (13) which connects to the frame limb profile below the ventilation openings (8), covers the ventilation openings (8) and, with the free end thereof, points towards the cladding front (7).

2. Building construction as claimed in claim 1, **characterised in that** the splash guard (13) is designed in the manner of a C-shaped profile oriented with its opening towards the cladding front (7).

3. Building construction as claimed in claim 1 or 2, **characterised in that** the lower frame limb profile interior (23) is assigned a splash guard (14) which connects to the frame limb profile rear wall (24) above the ventilation openings (8) and, with the free end thereof, points towards the cladding front (7).

4. Building construction as claimed in any one of claims 1 to 3, **characterised in that** the upper and preferably the lower frame limb profiles (5, 6) form a receiving rebate (15) for the cladding elements.

5. Building construction as claimed in any one of claims 1 to 4, **characterised in that** the upper and the lower frame limb profiles (5, 6) in the ventilation channel issuing out towards the rear-ventilation cross-section (4) are assigned screens for protecting against insects, which cover the ventilation channel cross-section (4).

6. Building construction as claimed in any one of claims 1 to 5, **characterised in that** the upper and lower frame limb profiles (5, 6) are assembled together with peripheral frame limb profiles (16) to form a peripherally closed frame.

7. Building construction as claimed in claim 6, **characterised in that** the rear walls of the frame limbs (5, 6, 16) are located in a common plane, and that the frame is preferably placed on a gas-tight but vapor-permeable substructure (11).

8. Building construction as claimed in any one of claims 1 to 7, **characterised in that** the rearventilated cladding element (1) comprises at least one solar collector.

9. Building construction as claimed in any one of claims 1 to 8, **characterised in that** the profiles of the frame (3) are to be attached via insulating webs (9) and/or at least one metallic connecting profile (29) to further profiles located in a plane therebehind.

10. Cladding element for use in a building construction as claimed in any one of claims 1 to 7, comprising a frame (3) which spans a rear-ventilation cross-section (4) and of which the upper and lower frame limb profiles (5, 6) have ventilation openings (8) issuing towards the cladding front (7), **characterised in that** at least the upper frame limb profile interior (12) is assigned a labyrinth seal-like splash guard (13) which connects to the frame limb profile below the ventilation openings, covers the ventilation openings (8) and, with the free end thereof, points towards the cladding front in the installed condition.

## Revendications

1. Construction avec des éléments de façade (1) à ventilation arrière, notamment des vitres ou des plaques, qui peuvent être accrochés devant une ossature porteuse (2) constituée notamment d'éléments de soutien verticaux et d'éléments porteurs horizontaux, un cadre (3), qui s'étend sur une section transversale de ventilation arrière (4) et dont les profilés de branche de cadre (5, 6) supérieur et inférieur présentent des ouvertures de ventilation (8) débouchant sur la face avant de la façade (7), étant associé respectivement aux éléments de façade, **caractérisée en ce qu'**une protection contre les projections d'eau (13), de type joint à labyrinthe, est associée au moins à l'espace intérieur (12) du profilé de branche de cadre supérieur, qui est raccordé au profilé de branche de cadre sous les ouvertures de ventilation (8), qui recouvre les ouvertures de ventilation (8) et qui est dirigé contre la face avant de la façade (7) par l'intermédiaire de son extrémité libre.

2. Construction selon la revendication 1, **caractérisée en ce que** la protection contre les projections d'eau (13) est réalisée selon le type d'un profilé en C dirigé avec son ouverture contre la façade avant de la façade (7).

3. Construction selon la revendication 1 ou 2, **caractérisée en ce qu'**une protection contre les projections d'eau (14) est associée à l'espace intérieur (23) du profilé de branche de cadre inférieur qui est raccordé à la paroi arrière du profilé de branche de cadre (24) au-dessus des ouvertures de ventilation (8), et qui est dirigé contre la face avant de la façade (7) par l'intermédiaire de son extrémité libre.

4. Construction selon l'une des revendications 1 à 3, **caractérisée en ce que** les profilés de branche de cadre (5, 6) supérieur et de préférence inférieur, forment un pli de logement (15) pour les éléments de façade.

5. Construction selon l'une des revendications 1 à 4, **caractérisée en ce que** des grilles de protection contre les insectes recouvrant la section transversale de conduit de ventilation (4) sont associées au profilé de branche de cadre (5, 6) supérieur et inférieur dans le conduit de ventilation débouchant vers la section transversale de ventilation arrière (4).

6. Construction selon l'une des revendications 1 à 5, **caractérisée en ce que** les profilés de branche de cadre (5, 6) supérieur et inférieur, que les profilés de branches de cadre (5, 6) conjointement avec des profilés de branches de cadres (16) formant bordure sont assemblés pour former un cadre fermé sur lui-même.

7. Construction selon la revendication 6, **caractérisée en ce que** les parois arrière des branches de cadre (5, 6, 16) sont situées dans un plan commun et **en ce que** le cadre est placé de préférence au niveau d'une sous-structure (11) étanche au gaz mais perméable à la vapeur.

8. Construction selon l'une des revendications 1 à 7, **caractérisée en ce que** l'élément de façade (1) à ventilation arrière, comprend au moins un capteur solaire.

9. Construction selon l'une des revendications 1 à 8, **caractérisée en ce que** les profilés du cadre (3) sont à apposer par le biais de traverses isolantes (9) et/ou au moins un profilé de liaison (29) métallique au niveau d'autres profilés en arrière d'un plan.

10. Eléments de façade pour utilisation dans une construction selon l'une des revendications 1 à 7, avec un cadre (3) qui s'étend sur une section transversale de ventilation arrière (4) et dont le profilé de branche de cadre (5, 6) supérieur et inférieur présente des ouvertures de ventilation (8) débouchant sur la face avant de la façade (7), **caractérisés en ce qu'**une protection contre les projections d'eau (13), de type joint à labyrinthe, est associée au moins à l'espace intérieur du profilé de branche de cadre (12) supérieur, qui est raccordé au profilé de branche de cadre sous les ouvertures de ventilation, qui recouvre les ouvertures de ventilation (8) et qui est dirigé, à l'état de montage, contre la face avant de la façade par l'intermédiaire de son extrémité libre.
